# EUROPÄISCHE PATENTSCHRIFT

(11) **EP 1 146 016 B1**
(45) Veröffentlichungstag und Bekanntmachung des Hinweises auf die Patenterteilung: **06.07.2005**
(21) Anmeldenummer: 01108991.9
(22) Anmeldetag: 11.04.2001
(51) Int. Cl.: C02F 1/28, C02F 1/52

(54) **Verfahren zur Vorbehandlung von organisch belastetem Wasser**
Process for pretreatment of water charged with organic material
Procédé de prétraitement des eaux chargées de matière organique

(30) Priorität: 14.04.2000 DE 10018603
(43) Veröffentlichungstag der Anmeldung: 17.10.2001
(73) Patentinhaber: Fariwar Umwelttechnik GbR, 65187 Wiesbaden (DE)
(72) Erfinder: Fariwar-Mohseni, Mohammad, Dr., 65187 Wiesbaden (DE)
(74) Vertreter: Weber, Roland, Dipl.-Chem.

(56) Entgegenhaltungen:
- WO-A-91/02698
- WO-A-92/08533
- DE-A- 2 507 733
- DE-A- 4 201 362
- GB-A- 1 512 481
- US-A- 4 217 210
- US-A- 4 279 756
- US-A- 5 204 007
- PATENT ABSTRACTS OF JAPAN vol. 009, no. 005 (C-260), 10. Januar 1985 (1985-01-10) & JP 59 160588 A (HITACHI PLANT KENSETSU KK), 11. September 1984 (1984-09-11)

## Beschreibung

Die vorliegende Erfindung betrifft ein Verfahren zur Vorbehandlung und Reinigung von organisch belastetem Abwasser. Insbesondere im industriellen Bereich können Abwässer neben anorganischen Komponenten eine Reihe von organischen Belastungen aufweisen. Unter organischen Belastungen versteht man beispielsweise Fette, Schmierstoffe, Wachse, Öle, Brenn- und Kraftstoffe, aliphatische und aromatische Kohlenwasserstoffe, organische Lösungsmittel sowie chlorierende Kohlenwasserstoffe, wie PCB und Dioxine.

Diese Abwässer weisen im allgemeinen einen sehr hohen CSB-Wert (chemischer Sauerstoffbedarf) auf. Der CSB- Wert, welcher durch gelöste organische Verunreinigungen im Wasser verursacht wird, liegt bei industriellen Abwässern beispielsweise aus der petrochemischen Industrie im allgemeinen zwischen 5.000 und 50.000 mg pro Liter. Die Zuführung solcher Abwässer in das kommunale Abwassernetz ist gesetzlich untersagt.

Bei der Wiederaufbereitung industrieller Abwässer kommen im allgemeinen biologische Verfahren zur Anwendung. Diese biologischen Verfahren beruhen auf der Lebenstätigkeit von Mikroorganismen. Sie zielen insbesondere darauf ab, die biologische Abbaufähigkeit der organischen Substanzen auszunutzen. Bei den aeroben Abbauvorgängen, das heißt bei den Vorgängen, die unter Anwesenheit von Sauerstoff ablaufen, ist im allgemeinen eine zahlreiche und unterschiedliche Fauna beteiligt (Protozoen, Mikroorganismen), welche dem Abwasser gezielt zugesetzt werden, und die durch die Aufnahme von Nährstoffen eine Reihe biochemischer Vorgänge hervorrufen bzw. organische Verunreinigungen abbauen. Diese biologische Tätigkeit kommt jedoch zum Stillstand oder wird weitgehend wirkungslos, wenn der CSB-Wert eine bestimmte Grenze überschreitet. Dann tritt außerdem Geruchsemission ein.

Darüber hinaus gibt es einige schwer abbaubare organische Komponenten in Abwässern, die den biologischen Abbau stark hemmen. Daher ist es im allgemeinen nicht möglich, die industriellen Abwässer direkt in die Reaktoren, in denen die biologischen Reinigungsverfahren ablaufen, die sogenannten Bioreaktoren, zu leiten. Vielmehr ist es notwendig, die industriellen Abwässer, die zunächst aus einer stabilen Emulsion (in Form einer homogenen braunen Brühe) bestehen, entsprechend vorzubereiten.

Hier handelt es sich im allgemeinen nicht nur um eine normale Öl/Wasser-Emulsion, in der die Bestandteile eine instabile Emulsion bilden und zusammen in einem Öl/Wasser-Gleichgewicht stehen, sondern es sind darin auch Bohr- und Schleifmittel enthalten, die überwiegend als konfektioniertes Produkt bei Metallspanverfahren und formgebenden Prozessen, wie z.B. beim Schleifen, Walzen, Bohren und Ziehen entstehen. Der Stabilisierungsgrad solcher Emulsionen hängt weitgehend von dem eingesetzten Emulgator und seiner chemischen Konstitution ab. Verwendet werden nicht ionogene Emulgatoren und ionische Emulgatoren je nach Anwendungsbereich. In den industriellen Abwässern sind beide Typen von Emulgatoren und auch normale Öl/Wasser-Gemische vorhanden, die zusammen eine sehr stabile Emulsion bilden.

Eine Möglichkeit der Vorbehandlung besteht darin, das Abwasser in ein Absetzbecken zu füllen. Nach sehr langer Wartezeit setzt sich dann am Boden des Absetzbeckens fester bzw. dickflüssiger Schlamm in geringer Menge ab.

Die oben schwimmenden dünnflüssigen Komponenten des Abwassers weisen dann einen etwas geringeren CSB-Wert auf, aber das Wasser ist noch nicht für den biologischen Abbau geeignet. Dieses Verfahren der Vorbehandlung in einem Absetzbecken hat jedoch u.a. den Nachteil, daß es zum einen sehr zeitaufwendig ist und zum anderen die Qualität des vorbehandelten Wassers bei weitem noch nicht den Anforderungen für ein effektives biologisches Verfahren genügt.

In der PATENT ABSTRACTS OF JAPAN Bd. 009, Nr. 005 (C-260), 10. Januar 1985 & JP 59 16 05 88 A wird ein Verfahren zur Reinigung von mit Metallen und Ölen belasteten Abwässern beschrieben, bei dem Eisen (III) chlorid (FeCl₃) und aktivierter Ton zugegeben wird. Nach Anhebung des pH-Wertes durch eine Base erfolgt die Phasentrennung.

In der GB 1512481 ist ein Reinigungsverfahren für proteinbelastete Abwässer beschrieben, wie zum Beispiel die Abwässer von Schlachthöfen, Fischfabriken und Molkereien. Dort wird Eisen-III-Chlorid als Spaltmittel für die Proteinabsetzung verwendet. Zusätzlich wird Bentonit als Filterhilfsmittel eingesetzt, damit die Eisenhydroxidmoleküle schneller ausfallen. Eine Phasentrennung wird durch die Zugabe des Bentonit nicht erreicht, es ist vielmehr ein zusätzlicher Flotationsschritt notwendig.

Die WO 92/08533 beschreibt ein Verfahren zur Behandlung von Dispersion, wie zum Beispiel Öl/Wasser-Dispersionen. Hier wird zur Reinigung Bentonit offenbar zusammen mit einem Salz zugeführt wird. Laut der technischen Lehre dieser Schrift muß Bentonit jedoch in Form einer Suspension und nicht in trockener Form zugegeben werden. Eine Phasentrennung wird nicht durch die Zugabe des Absorbens erreicht, sondern erfolgt erst in einem sich an zwei Reaktorbehälter anschließenden Behälter, wobei unter Ausnutzung der während des Verfahrens in die zu behandelnde Flüssigkeit eingebrachten Luft, die auf der Wasserphase aufschwimmende ölige Phase abgetrennt wird.

Der vorliegenden Erfindung liegt daher die Aufgabe zugrunde, ein Verfahren zur Vorbehandlung von organisch belastetem Abwasser zur Verfügung zu stellen, das mittlere bis größere Mengen von industriellem Abwasser zügig und effektiv vorbehandeln kann, so daß das vorbehandelte Wasser direkt einem Bioreaktor oder einem weiteren Vorbehandlungsverfahren zugeführt werden kann.

Diese Aufgabe wird erfindungsgemäß durch ein Verfahren zur Vorbehandlung von organisch belastetem Abwasser gelöst, das die Schritte aufweist:
Einfüllen des Abwassers in einen Reaktor,
Zugabe eines Adsorbens in trockener Form und
Abtrennen von Dünnschlamm, wobei als Adsorbens Schichtsilikate des Aluminiums, in denen das Al⁺⁺⁺ zumindest teilweise durch andere Kationen ersetzt ist.

Durch die Zugabe des Adsorbens wird erreicht, daß die Trennung von Klarwasser und organisch belastetem Dünnschlamm zügig erfolgt. Dabei führt anscheinend die katalytische Wirkung des Adsorbens zu Hydrophobierungen und zur Koagulation der suspendierenden Teile im Reaktor. Als Adsorbens kommen im Prinzip eine ganze Reihe von Stoffen in Frage. Mit großem Erfolg sind Tonmineralien zur Anwendung gekommen. Als Tonmineralien bezeichnet man heute eine Reihe von Schichtsilikaten des Aluminiums in denen das Al⁺⁺⁺ teilweise durch andere Kationen ähnlicher Größe wie: Ca⁺⁺, Mg⁺⁺, Fe⁺⁺⁺, Ni⁺⁺ usw. ersetzt ist. Kaoline und Bentonite sind natürliche feinkörnige lockere Gesteine, die als wesentliche Komponenten solche Tonminerale enthalten. Hauptsächlich handelt es sich dabei um die Minerale der Gruppe von Kaolinit, Illit, Smectit und Chlorit, die zumeist im Gemisch miteinander auftreten.

In der wäßrigen Phase suspendieren die Tonmineralien und zeigen eine Reihe besonderer Eigenschaften und Verhaltensweisen, wie:
- Bindevermögen bei feinen Partikeln und
- Gleitvermögen bei gröberen Partikeln.

Da die beiden oben erwähnten Eigenschaften nur in suspendierter Form in der Wasserphase auftreten, werden diese auch als Kolloidverhalten bezeichnet.

Diese Partikel besitzen folgende Eigenschaften:
- sie besitzen große spezifische Oberflächen, ca. 270 m²/g
- die Aktivierung erfolgt durch Erhitzen, Kristallwasser wird entfernt
- sie sind gekennzeichnet durch stark anisometrische Formen
- sie besitzen eine negative Überschußladung, die zur Bindung und zum lonenaustausch führt
- ferner können sie durch Adsorption eine Reihe von organischen Kontaminationen aus der Wasserphase durch Anlagerung in Gegenwart von dreiwertigen Kationen eliminieren
- die Ausscheidung aus der Wasserphase erfolgt erfahrungsgemäß am besten bei pH = 7
- die Adsorptionskapazität und das lonenaustauschvermögen steigt bei Tonmineralien von Kaolinit zu Smectit an
- die mechanische Aktivierung (Langzeitmahlung) erhöht die Adsorptionskapazität
- die Ablagerung erfolgt besser und die Phasentrennung wird deutlicher sichtbar, wenn zusätzlich ein organisch synthetisches Hochpolymer im ppm-Bereich (mg/l oder g/m³) zugesetzt wird
- die Zumischung des Polymers zu dem Adsorbens erfolgt vorzugsweise derart, daß zunächst das Polymer in einem organischen Lösungsmittel gelöst wird, daraufhin verdünnt wird und schließlich während des Rührens dem Adsorbens zugesetzt (bzw. dosiert) wird
- hierdurch ist eine flächendeckende homogene Verteilung des Polymers gewährleistet.

Nach kurzer Zeit verdunstet das organische Lösungsmittel und die Adsorbens-Partikel sind gleichmäßig von einem dünnen Polymerfilm in einem Coatingsystem beschichtet. Damit ist gesichert, daß das Adsorbens immer mit Polymer im ppm-Bereich dosiert wird.

Es kommen zahlreiche Polymere in Frage:

Unter anderem sind anionische Copolymere von Acrylamid-Verbindungen anwendbar. Acrylamide besitzen in wäßriger Lösung eine negative Ladung und einen anionaktiven Charakter.

Die anionischen Polyacrylamide haben in wäßrigen Lösungen eine starke Affinität zu der Oberfläche der suspendierten Feststoffteile, die abhängig von der lonogenität der Partikel ist.

Diese Wechselwirkung gegenüber den Feststoffteilen ist auf Wasserstoffbrückenbildung und elektrostatische Kraft sowie Ladungsaustausch zurückzuführen.

Diese führen zur Destabilisierung der Emulsion und Abtrennung von Suspensionen aus der Wasserphase. Dabei fällt die organische Kontamination mit suspendierten Teilen als Dünnschlamm aus, so daß klares, vorbehandeltes Wasser zur Weiterbearbeitung im biologischen Abbauverfahren und säulenchromatographischer Intensivreinigung vorliegt.

Besonders bevorzugt ist ein Verfahren, bei dem das Adsorbens in trockenem Zustand möglichst in Pulver-, vorzugsweise in Puderform zugegeben wird. Durch diese Maßnahme wurde eine noch zügigere Phasentrennung erreicht.

Versuche haben bestätigt, daß die Wirkung des Adsorbens noch verstärkt werden kann, wenn vor oder während der Zugabe des Adsorbens, vorzugsweise vor der Zugabe des Adsorbens, Eisen(III)chlorid (FeCl₃) zugegeben wird. Auch wenn jede noch so geringe Menge an Eisen(III)chlorid das Verfahren verbessern kann, so wird doch vorzugsweise so lange Eisen(III)chlorid zugegeben, bis der pH-Wert der Flüssigkeit im Reaktor kleiner als 5, vorzugsweise kleiner 4,5, besonders bevorzugt zwischen etwa 4 und 4,5 beträgt, je nach dem pH-Wert des Abwassers.

Die Versuche haben gezeigt, daß je nach Qualität des Wassers soviel Eisen(III)chlorid zugesetzt werden sollte, daß permanent die Schlammphase unten und die Wasserphase oben ist. Denn bei zu geringer Konzentration von Eisen(III)chlorid kann es zu einer Phasenverschiebung kommen.

Das erfindungsgemäße Verfahren kann dadurch weiter verbessert werden, daß vor oder gleichzeitig mit der Zugabe des Adsorbens ein Neutralisator, vorzugsweise Natronlauge, zugeführt wird. Die Wirkung des Adsorbens scheint um so größer zu werden, je dichter der pH-Wert am neutralen Wert 7 liegt. Der pH-Wert des industriellen/petrochemischen Abwassers beträgt üblicherweise zwischen etwa 5 und 5,5. Durch Zugabe von Eisen(III)chlorid fällt dieser sogar noch weiter ab. Daher wird bevorzugt so viel Neutralisator zugeführt, bis der pH-Wert über 6, vorzugsweise etwa 7 beträgt.

Es hat sich gezeigt, daß vorzugsweise zwischen 0,5-0,75 g/l des Adsorbens zugegeben werden sollte, das heißt zwischen 500-750g Adsorbens pro cbm Abwasser.

Eine besonders bevorzugte Ausführungsform des erfindungsgemäßen Verfahrens sieht vor, daß die Menge des zuzugebenden Adsorbens in Abhängigkeit von der Qualität des Abwassers bestimmt wird. Dies kann beispielsweise dadurch geschehen, daß der pH-Wert und/oder der CSB-Wert des Abwassers vor der Zugabe des Adsorbens bestimmt wird, und in Abhängigkeit von dem Ergebnis der Bestimmung die Menge des zuzugebenden Adsorbens festgelegt wird.

Alternativ dazu ist es beispielsweise möglich, den Neutralisator zusammen mit dem Adsorbens mit Hilfe eines Feindosierers zuzuführen, wobei gleichzeitig der pH-Wert des Abwassers gemessen wird und bei Erreichen eines bestimmten pH-Wertes der Dosiervorgang gestoppt wird. So ist gewährleistet, daß Abwässer, die geringer belastet sind und daher meist einen höheren pH-Wert aufweisen, nur eine geringe Menge von Adsorbens erhalten als Abwässer mit normaler Belastung.

Eine zweckmäßige Ausführungsform des vorliegenden Verfahrens sieht vor, daß Eisen(III)chlorid und/oder der Neutralisator und/oder das Adsorbens unter Rühren zugegeben werden, wobei der Rührvorgang vorzugsweise etwa eine Stunde andauert. Dadurch ist eine gute Durchmischung der Zugabestoffe mit dem Abwasser gewährleistet. Nach dem Rührvorgang wird zweckmäßigerweise etwa 45 bis 75 Minuten (in einigen Fällen bis zu 120 Minuten) gewartet, so daß sich der Dünnschlamm am Boden des Reaktors absetzen kann. Aus der ursprünglichen braunen Brühe sind klare Wasserphasen und dunkelbrauner Dünnschlamm entstanden, wobei sich der Dünnschlamm unten abgesetzt hat. Das Volumenverhältnis von Dünnschlamm zu klarem Wasser beträgt etwa 1/3 zu 2/3.

Das Verfahren wird vorzugsweise in einem Reaktor durchgeführt, der ein Volumen zwischen etwa 20 und etwa 100 m³ faßt und dessen Bodenwand zur leichteren Entnahme des Dünnschlamms konusförmig ausgebildet ist.

Eine weitere Verbesserung des Verfahrens besteht darin, dem Reaktor ein Abwasserbecken vorzuschalten. Dadurch kann das angelieferte industrielle Abwasser zunächst im Abwasserbecken gesammelt werden. Im Abwasserbecken kommt es bereits zu einer Sedimentation von Sanden und anderen Schwebstoffen. Der Reaktor wird dann aus dem Abwasserbecken befüllt. Die Verbindung zwischen Abwasserbecken und Reaktor wird dann geschlossen und das eingangs beschriebene Verfahren wird in dem Reaktor durchgeführt.

Nach entsprechender Ruhe- und Wartezeit wird das klare Wasser aus dem Reaktor abgepumpt sowie der abgesetzte Dünnschlamm abgezogen. Erst dann sollte die Verbindung zwischen Abwasserbecken und Reaktor wieder geöffnet werden und der Reaktor von neuem befüllt werden.

Durch das im Reaktor stattfindende Verfahren kann der CSB-Wert des industriellen, insbesondere des petrochemischen Abwassers, um etwa 20 bis 30 % reduziert werden. Um die Qualität des vorbehandelten Wassers weiter zu steigern, ist es besonders bevorzugt, wenn das aus dem Reaktor entnommene Wasser in ein Belüftungsbecken geführt wird, in dem das Wasser mit Luft vermischt wird. Dadurch tritt im Belüftungsbecken eine Feinflotation ein, das heißt die Trennung zwischen dem Rest von organischer Phase und wäßriger Phase wird begünstigt. Dabei wird besonders bevorzugt ein Belüftungsbecken verwendet, bei dem ein Injektor vorhanden ist, der in das Wasser ein Luftvolumen einbringt, das mindestens dem Wasservolumen entspricht, vorzugsweise dieses sogar um das 2- bis 4-fache übersteigt, wobei die Luftmenge vorzugsweise innerhalb 50 bis 90 Minuten injiziert wird. Hat beispielsweise das Belüftungsbecken ein Fassungsvermögen von etwa 40 m³, so wird vorzugsweise über den Injektor Luft mit 160 m³ pro Stunde für eine Dauer von 70 Minuten eingebracht und das Wasser wird mit einer Kapazität von 180 m³ pro Stunde umgewälzt und mit Luft gut vermischt. Dadurch tritt die Luft zwischen wäßrige und organische Phase und führt zu einer Feinflotation.

Besonders bevorzugt ist ein Verfahren, bei dem Wasser aus dem Reaktor oder gegebenenfalls aus dem Belüftungsbecken durch einen Lamellenklärer geführt wird. In dem Lamellenklärer sind Lamellen angeordnet, durch die das Wasser in laminarer Strömung geführt wird. Dabei können sich kleinere schwebende Öltröpfchen an den Lamellen zu größeren Tropfen ausbilden, welche dann an die Oberfläche getrieben werden. Eventuell im Lamellenklärer enthaltene Schwebstoffe sinken nach unten. Der Lamellenklärer weist daher an seiner Unterseite einen Abzug auf, durch den die abgesunkenen Schwebstoffe abgezogen werden können.

Besonders zweckmäßig ist ein Verfahren, bei dem das Abwasser aus dem Reaktor oder gegebenenfalls aus dem Belüftungsbecken und dem Lamellenklärer in einen Trennreaktor geführt wird, wobei im Trennreaktor Öl und leichtsiedende Flüssigkeiten durch Koaleszenz abgeschieden werden. Der Trennreaktor weist dabei vorzugsweise eine Filtereinrichtung mit Füllkörpern auf, durch die das Wasser geführt wird, wobei die Füllkörper vorzugsweise aus Rasching-Ringen (350 g/m³) bestehen. Der Trennreaktor sollte zweckmäßigerweise eine Vorrichtung aufweisen, die in der Lage ist, das auf der Wasseroberfläche schwimmende Öl abzuskimmen. Nachdem das Abwasser den Trennreaktor durchlaufen hat, kann das vom Öl und leichtsiedenden Flüssigkeiten befreite Wasser im allgemeinen direkt in den Bioreaktor geführt werden.

Weitere Vorteile, Merkmale und Anwendungsmöglichkeiten der vorliegenden Erfindung werden deutlich anhand der folgenden Beschreibung einer bevorzugten Ausführungsform sowie der dazugehörigen Figur.

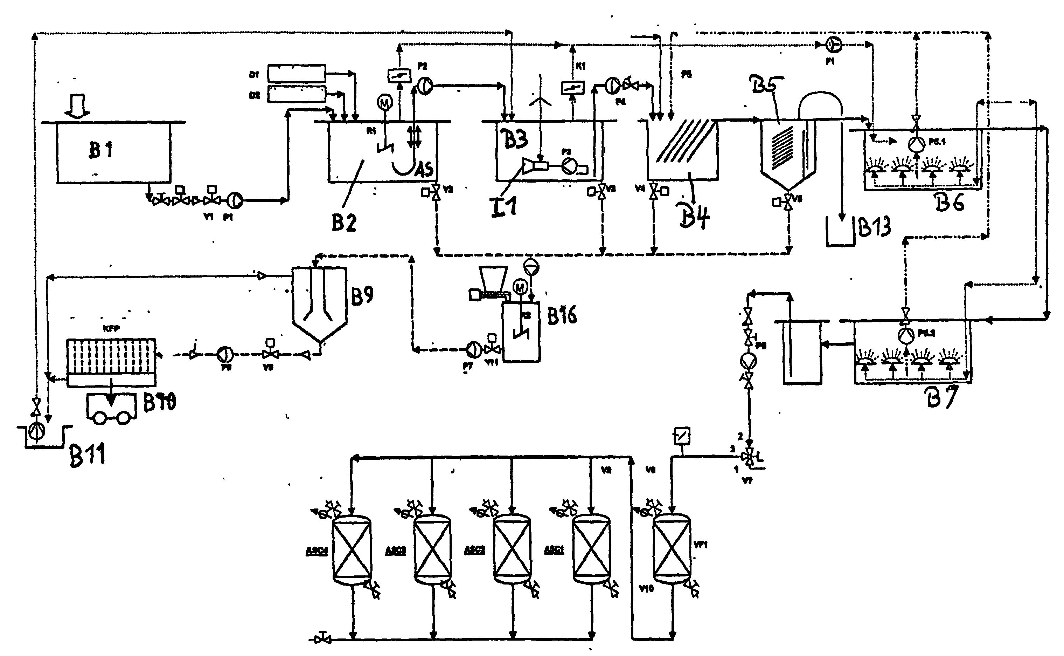

Die einzige Figur zeigt das verfahrenstechnische Ablaufschema der erfindungsgemäßen Abwasservorbehandlung.

Das industrielle Abwasser wird in dem mit B1 bezeichneten Abwasserbecken (siehe links oben) gesammelt. Dieses Becken faßt in dem hier gezeigten Beispiel ein Volumen von ca. 25.000 m³. Die im folgenden beschriebene Anlage ist derart dimensioniert, daß pro Jahr etwa 50.000 m³ Abwasser behandelt werden können. Etwa alle 3 Stunden werden über die Membranpumpe P1 durch Öffnen des Ventils V1 etwa 18 m³ Abwasser zum Reinigungsvorgang entnommen und dem Reaktor B2 zugeführt. Der Zulauf des Reaktors B2 ist derart demissioniert, daß er innerhalb von 30 Minuten mit etwa 18 m³ Abwasser befüllt wird. Im Reaktor erfolgt die grundlegende Konditionierung des Abwassers. Während des Befüllens setzt sich das Rührwerk R1 sofort in Bewegung. Nach homogener Durchmischung wird der pH-Wert gemessen. Der pH-Wert liegt meistens zwischen 4,5 und 5,5, also deutlich im Säurebereich und hat einen CSB-Wert von über 25.000 mg pro Liter. Im folgenden wird Eisen(III)chlorid zugegeben, bis der pH-Wert in dem Reaktor auf einen Wert zwischen 4 und 5 zurückfällt. Im Anschluß daran wird unter starkem Rühren Natriumhydroxid (als Neutralisator) und das Adsorbens gleichzeitig zugesetzt, bis das Wasser den pH-Wert 7 erreicht. Daraufhin wird die Zugabe gestoppt und das Rührwerk für etwa 7 Minuten nur noch langsam bewegt. In diesem Zustand erkennt man bereits, daß sich auf der Wasseroberfläche kristallartige Strukturen bilden, die sich vergrößern und schließlich die gesamte Oberfläche des Wassers benetzen. Das Rührwerk wird jetzt vollends ausgeschaltet und eine Ruhepause von etwa einer Stunde eingelegt. Während dieser Zeit setzt sich der Schlamm unten ab, während sich im oberen Teil des Reaktors klares Wasser bildet. Es ist möglich, in den Reaktor zusätzlich eine geringe Menge Kalk zuzugeben, die die Sedimentation des Dünnschlamms verstärkt. Außerdem hat sich gezeigt, daß die Zugabe eines organischen Polymers von Vorteil sein kann.

Der CSB-Wert des klaren Wassers liegt nun nur noch bei etwa 10.000 bis 15.000 mg pro Liter. Die Vorreinigungsstufe im Reaktor ist jedoch nicht nur wegen des CSB-Wertabbaus so wichtig, sondern die Befreiung des Wassers von organischem Schlamm und die Beseitigung von biologischen abbauhemmenden Produkten sind ebenfalls für das Hauptreinigungsverfahren von großem Vorteil. In der hier dargestellten Ausführungsform beträgt die zuzuführende Tagesmenge an Eisen(III)chlorid (40%ig) etwa 72 kg pro Tag. Bei manchen petrochemischen Abwässern, die oftmals sogar einen niedrigeren CSB-Wert von 5.000-12.000 aufweisen, tritt bei einem Zusatz von 10 ml, 40%ig FeCl₃ eine Phasenverschiebung ein, das heißt die Schlammphase kommt nach oben und die wäßrige Phase sinkt nach unten ab. Hier muß die Menge von FeCl₃ um das etwa 5-6fache gegenüber dem vorherigen Wert erhöht werden, so daß dann die Wasserphase nach oben tritt, dabei fällt der pH-Wert auf etwa 3-3,5 ab, der anschließend neutralisiert wird. Je nach Qualität des Abwassers beträgt die Menge des Adsorbens zwischen 50-750 g/l. Nach Beendigung der Absetzzeit wird das Klarwasser durch die Absaugvorrichtung AS mit Hilfe der Pumpe P2 in das Belüftungsbecken B3 geführt. Des weiteren wird Dünnschlamm durch die Pumpe P7 nach Öffnung des Ventils V2 dem Mischbehälter B16 zugeführt.

Die Entleerzeit des Reaktors beträgt ebenfalls ca. 30 Minuten, so daß die Gesamtverweilzeit im Reaktor etwa 3 Stunden beträgt.

Der Mischbehälter B16, besser gesagt der Kalkdosierbehälter, hat ein Volumen von etwa 2 m³. Der hauptsächlich im Reaktor B2 angefallene Dünnschlamm wird im Mischbehälter B16 unter ständigem Rühren mit einer geringen Menge Kalk versetzt, um eine weitere Volumenverringerung des Schlammes zu erreichen. Es kommt zu einer erheblichen Reduzierung der Schlammenge; Klarwasser kann im Sedimentationsbehälter B9 abgetrennt werden. Der Sedimentationsbehälter hat ein Volumen von etwa 15 m³. Hier wird der Schlamm von Klarwasser getrennt. Der Schlamm wird in die Kammerfilterpresse geführt, in der er gepreßt und schließlich als Filterkuchen mit dem Container B10 gesammelt und abtransportiert wird. Das Klarwasser aus dem Sedimentationsbehälter und der Kammerfilterpresse wird über das Pumpensumpffiltrat B11 ebenfalls dem Belüftungsbecken B3 zugeführt.

Im Belüftungsbecken ist ein Injektor I1 angebracht, der Frischluft außerhalb des Beckens ansaugt und in das Abwasser pumpt. Dadurch wird das Klarwasser aus dem Reaktor in sich kräftig umgepumpt mit 180 m³/h und mit ca. 160 m³ Luft pro Stunde durchmischt.

Das Wasser im Belüftungsbecken ist schwach basisch bis neutral. Dies rührt daher, daß das aus dem Mischbehälter B16 abgetrennte Klarwasser ebenfalls in das Belüftungsbecken geführt wurde. Im Mischbehälter B16 wurde jedoch Kalk dosiert, was die schwach basische Eigenschaft des Klarwassers erklärt.

Im Belüftungsbecken tritt eine Feinflotation ein. Das Wasser wird mit Hilfe der Pumpe P4 dann langsam dem Belüftungsbecken entnommen und dem Lamellenklärer B4 zugeführt. Der Lamellenklärer weist in dieser Ausführungsform ein Fassungsvermögen von 43 m³ auf. Während die vorherigen Becken im Intervallbetrieb gefüllt und wieder geleert wurden, ist der Lamellenklärer immer gefüllt, da hier das Abwasser nur über einen Überlauf in das nächste Becken, den Trennreaktor B5, geführt werden kann. Das Abwasser wird mit Hilfe eines Rohres in den unteren Bereich des Lamellenklärers geführt. Das Wasser muß durch die Lamellen strömen. Durch die laminare Strömung zwischen den Lamellen können sich kleinere schwebende Öltröpfchen an den Lamellen zu größeren Tropfen ausbilden, die dann an die Oberfläche schwimmen und schließlich im Trennreaktor B5 komplett abgeschieden werden. Eventuell vorhandene Schwebstoffe sinken nach unten. Sich im Belüftungsbecken oder im Lamellenklärer absetzender Dünnschlamm kann über die Ventile V3 und V4 ebenfalls in den Mischbehälter B16 geführt werden. Auf den Lamellenklärer B4 folgt der Trennreaktor B5, welcher in der gezeigten Ausführungsform ein Volumen von etwa 7 m³ faßt. Der Trennreaktor hat die Aufgabe, Öl und leicht siedende Flüssigkeiten vom Wasser durch Koaleszenz abzuscheiden.

Der Trennreaktor besteht aus mehreren Kammern. Dabei ist der Fließweg des Wassers derart vorgesehen, daß es eine Filterkassette durchströmen muß. Diese ist mit Rasching-Ringen, die als Gitterfüllkörper dienen, ausgerüstet. Dabei durchströmt das Wasser die Filterkassetten im wesentlichen in seitlicher Richtung. An der Oberseite der Filterkassetten ist am höchsten Punkt eine Öffnung angebracht, durch welche abgeschiedenes Öl nach oben steigen kann. Das sich an der Oberfläche ansammelnde Öl wird abgeskimmt und in einem Ölsammelbehälter B13 gesammelt.

Das derart gereinigte Wasser wird zu den Bioreaktoren B6 und B7 geführt. Hier findet mit Hilfe von adaptierten Mikroorganismen die Klarwassernitrifikation im Festbettkaskadensystem (100 m³ Füllkörper/Becken) statt (bei 750 m³/h Luftzufuhr) statt.

Das aus den Bioreaktoren überströmende Wasser wird schließlich durch den Vorfilter VF1 zu den ASC-Reaktoren ASC1 bis ASC4 geführt. Die Funktionsweise der Adsorptionssäulenchromatographie ist bekannt und soll daher hier nicht näher erläutert werden.

Durch das beschriebene Vorbehandlungsverfahren ist eine effektivere Nutzung der an sich bekannten Reinigungsverfahren möglich.

## Patentansprüche

1. Verfahren zur Vorbehandlung von organisch belastetem, industriellem/petrochemischem Abwasser, das die Schritte aufweist:
Einfüllen des Abwassers in einen Reaktor,
Zugabe von Schichtsilikaten des Aluminiums, in denen das Al⁺⁺⁺ zumindest teilweise durch andere, vorzugsweise ähnlich große Kationen, wie z.B. Fe⁺⁺, Fe⁺⁺⁺, Mg⁺⁺, Ca⁺⁺, K⁺, Na⁺ ersetzt ist, in trockener Form als Adsorbens und Abtrennen von Dünnschlamm, **dadurch gekennzeichnet, daß** vor oder während der Zugabe, vorzugsweise vor der Zugabe, des Adsorbens Eisen(III)chlorid (FeCl₃) zugegeben wird, wobei so lange FeCl₃ zugegeben wird, bis der pH-Wert der Flüssigkeit im Reaktor kleiner als 5, vorzugsweise kleiner als 4,5, besonders bevorzugt zwischen 4 und 4,5 ist.

2. Verfahren nach Anspruch 1, **dadurch gekennzeichnet, daß** als Adsorbens im wesentlichen die Minerale der Kaolinit, Bentonit, Illit, Smectit und Chlorit-Gruppe verwendet werden, die zumeist im Gemisch miteinander auftreten und eine Austauschkapazität und ein Bindevermögen aufweisen.

3. Verfahren nach Anspruch 2, **dadurch gekennzeichnet, daß** die Adsorptionskapazität und das lonenaustauschvermögen von Kaolin zu Smectit steigt.

4. Verfahren nach einem der Ansprüche 1 bis 3, **dadurch gekennzeichnet, daß** das Adsorbens in Pulverform, vorzugsweise in Puderform, zugegeben wird.

5. Verfahren nach einem der Ansprüche 1 bis 4, **dadurch gekennzeichnet, daß** vor oder mit der Zugabe des Adsorbens ein Neutralisator, vorzugsweise Natronlauge, zugeführt wird.

6. Verfahren nach Anspruch 5, **dadurch gekennzeichnet, daß** so viel Neutralisator zugeführt wird, bis der pH-Wert über 6, vorzugsweise etwa 7 beträgt.

7. Verfahren nach einem dem Ansprüche 1 bis 6, **dadurch gekennzeichnet, daß** zwischen 10 und 850 ppm, vorzugsweise zwischen 80 und 300 ppm, Adsorbens zugegeben wird.

8. Verfahren nach einem der Ansprüche 1 bis 7, **dadurch gekennzeichnet, daß** die Menge des zuzugebenden Adsorbens in Abhängigkeit von der Qualität des Abwassers bestimmt wird.

9. Verfahren nach einem der Anspruche 5 bis 7, **dadurch gekennzeichnet, daß** FeCl₃ und/ oder Neutralisator und/ oder Adsorbens unter Rühren zugegeben werden und das der Rührvorgang vorzugsweise etwa 90 Minuten, das heißt zwischen 60 und 120 Minuten andauert.

10. Verfahren nach einem der Ansprüche 1 bis 9, **dadurch gekennzeichnet, daß** nach Zugabe des Adsorbens gegebenenfalls nach dem Rührvorgang etwa 45 bis 120 Minuten gewartet wird, bevor der Dünnschlamm abgetrennt wird.

11. Verfahren nach einem der Ansprüche 1 bis 10, **dadurch gekennzeichnet, daß** das Verfahren in einem Reaktor durchgeführt wird, der ein Volumen zwischen etwa 20 m³ und etwa 100 m³ faßt.

12. Verfahren nach einem der Ansprüche 1 bis 11, **dadurch gekennzeichnet, daß** das Abwasser zunächst in ein Abwasserbecken geführt wird und von dort nach und nach dem Reaktor zugeführt wird.

13. Verfahren nach einem der Ansprüche 1 bis 12 **dadurch gekennzeichnet, daß** das vom Dünnschlamm abgetrennte Wasser in ein Belüftungsbecken geführt wird, in dem das Wasser mit Luft vermischt wird.

14. Verfahren nach Anspruch 13 **dadurch gekennzeichnet, daß** in dem Belüftungsbecken ein Injektor verwendet wird, der in das im Belüftungsbecken enthaltene Wasservolumen mindestens das gleiche Volumen vorzugsweise mindestens das 3 bis 5fache Volumen an Luft unter Normalbedingungen injiziert, wobei die Luft vorzugsweise innerhalb von 50 bis 90 Minuten injiziert wird.

15. Verfahren nach einem der Ansprüche 1 bis 14, **dadurch gekennzeichnet, daß** das Wasser aus dem Reaktor oder gegebenenfalls aus dem Belüftungsbecken durch einen Lamellenklärer geführt wird.

16. Verfahren nach einem der Ansprüche 1 bis 15, **dadurch gekennzeichnet, daß** das Wasser aus dem Reaktor oder gegebenenfalls aus dem Belüftungsbecken oder aus dem Lamellenklärer in einen Trennreaktor geführt wird, wobei im Trennreaktor Öl und leichtsiedende Flüssigkeiten durch Koaleszenz abgeschieden werden.

17. Verfahren nach Anspruch 16, **dadurch gekennzeichnet, daß** der Trennreaktor eine Filtereinrichtung mit Füllkörpern aufweist, wobei die Füllkörper vorzugsweise aus Rasching-Ringen bestehen.

18. Verfahren nach Anspruch 16 oder 17, **dadurch gekennzeichnet, daß** im Trennreaktor das auf der Wasseroberfläche schwimmende Öl abgeskimmt wird.

## Claims

1. A process for the pre-treatment of organically loaded, industrial/petrochemical waste water, which comprises the following steps:
introducing the waste water into a reactor,
adding stratified silicates of aluminium, in which the Al⁺⁺⁺ is at least partially replaced by other cations of preferably similar size such as for example Fe⁺⁺, Fe⁺⁺⁺, Mg⁺⁺, Ca⁺⁺, K⁺ and Na⁺, in dry form as an adsorbent, and separating off thin sludge, **characterised in that** prior to or during the addition and preferably prior to the addition of the adsorbent iron (III) chloride (FeCl₃) is added, wherein FeCl₃ is added until the pH-value of the liquid in the reactor is less than 5, preferably less than 4.5, particularly preferably between 4 and 4.5.

2. A process according to claim 1 **characterised in that** the adsorbent used is substantially the minerals from the kaolinite, bentonite, illite, smectite and chlorite group which generally occur as a mixture together and have an exchange capacity and a binding capability.

3. A process according to claim 2 **characterised in that** the adsorption capacity and the ion exchange capability rises from kaolin to smectite.

4. A process according to one of claims 1 to 3 **characterised in that** the adsorbent is added in powder form, preferably in fine powder form.

5. A process according to one of claims 1 to 4 **characterised in that** a neutraliser, preferably caustic soda, is added prior to or with the addition of the adsorbent.

6. A process according to claim 5 **characterised in that** so much neutraliser is added until the pH-value is above 6, preferably about 7.

7. A process according to one of claims 1 to 6 **characterised in that** between 10 and 850 ppm, preferably between 80 and 300 ppm, of adsorbent is added.

8. A process according to one of claims 1 to 7 **characterised in that** the amount of the adsorbent to be added is determined m dependence on the quality of the waste water.

9. A process according to one of claims 5 to 7 **characterised in that** FeCl₃ and/or neutraliser and/or adsorbent are added with agitation and the agitation process lasts preferably for about 90 minutes, that is to say between 60 and 120 minutes.

10. A process according to one of claims 1 to 9 **characterised in that** after the addition of the adsorbent optionally after the agitation process there is a wait of about 45 to 120 minutes before the thin sludge is separated off.

11. A process according to one of claims 1 to 10 **characterised in that** the process is carried out in a reactor which is of a volume of between about 20 m³ and about 100 m³.

12. A process according to one of claims 1 to 11 **characterised in that** the waste water is firstly passed into a waste water tank and from there progressively fed to the reactor.

13. A process according to one of claims 1 to 12 **characterised in that** the water which is separated from the thin sludge is passed into an aeration tank in which the water is mixed with air.

14. A process according to claim 13 **characterised in that** an injector is used in the aeration tank, which injects into the volume of water contained in the aeration tank at least the same volume and preferably at least 3 to 5 times the volume of air under normal conditions, the air preferably being injected within 50 to 90 minutes.

15. A process according to one of claims 1 to 14 **characterised in that** the water is passed out of the reactor or optionally out of the aeration tank through a plate clarifier.

16. A process according to one of claims 1 to 15 **characterised in that** the water is passed out of the reactor or optionally out of the aeration tank or out of the plate clarifier into a separation reactor, wherein oil and low-boiling liquids are separated off in the separation reactor by coalescence.

17. A process according to claim 16 **characterised in that** the separation reactor has a filter device with filling bodies, wherein the filling bodies preferably comprise Raschig rings.

18. A process according to claim 16 or claim 17 **characterised in that** in the separation reactor the oil floating on the surface of the water is skimmed off.

## Revendications

1. Procédé de prétraitement d'eaux usées d'origine industrielle ou pétrochimique et chargées en produits organiques, lequel procédé comporte les étapes suivantes :
l'introduction des eaux usées dans un réacteur,
l'addition de phyllosilicates d'aluminium dans lesquels Al⁺⁺⁺ est remplacé au moins partiellement par d'autres cations, avantageusement de taille similaire, tels que par exemple Fe⁺⁺, Fe⁺⁺⁺, Mg⁺⁺, Ca⁺⁺, K⁺, Na⁺, sous une forme sèche en tant qu'adsorbant, et la séparation de la pâte fluide, **caractérisé en ce que** du chlorure ferrique (FeCl₃) est ajouté avant ou pendant l'addition, avantageusement avant l'addition, de l'adsorbant, FeCl₃ étant ajouté jusqu'à ce que la valeur de pH du liquide dans le réacteur soit inférieur à 5, avantageusement inférieur à 4,5, en particulier de préférence entre 4 et 4,5.

2. Procédé selon la revendication 1, **caractérisé en ce qu'**on utilise comme adsorbant essentiellement des minerais du groupe comprenant la kaolinite, l'illite, la smectite et la chlorite qui apparaissent le plus souvent en mélange et qui présentent une capacité d'échange cationique et un pouvoir agglutinant.

3. Procédé selon la revendication 2, **caractérisé en ce que** la capacité d'adsorption et le pouvoir d'échange ionique augmentent du kaolin à la smectite.

4. Procédé selon l'une des revendications 1 à 3, **caractérisé en ce que** l'adsorbant est ajouté sous forme pulvérulente, avantageusement sous la forme d'une poudre.

5. Procédé selon l'une des revendications 1 à 4, **caractérisé en ce qu'**un agent de neutralisation, avantageusement de la soude caustique, est ajouté avant ou en même temps que l'adsorbant.

6. Procédé selon la revendication 5, **caractérisé en ce que** l'agent de neutralisation est ajouté jusqu'à ce que la valeur de pH soit supérieure à 6, avantageusement soit sensiblement égale à 7.

7. Procédé selon l'une des revendications 1 à 6, **caractérisé en ce que** l'adsorbant est ajouté dans une quantité comprise entre 10 et 850 ppm, avantageusement entre 80 et 300 ppm.

8. Procédé selon l'une des revendications 1 à 7, **caractérisé en ce que** la quantité d'adsorbant ajoutée est déterminée en fonction de la qualité des eaux usées.

9. Procédé selon l'une des revendications 5 à 7, **caractérisé en ce que** FeCl₃ et/ou l'agent de neutralisation et/ou l'absorbant sont ajoutés sous agitation et **en ce que** le processus d'agitation dure avantageusement 90 minutes environ, c'est-à-dire entre 60 et 120 minutes.

10. Procédé selon l'une des revendications 1 à 9, **caractérisé en ce que**, après avoir ajouté l'adsorbant, le cas échéant après le processus d'agitation, on attend 45 à 120 minutes environ avant de séparer la pâte fluide.

11. Procédé selon l'une des revendications 1 à 10, **caractérisé en ce que** le procédé est réalisé dans un réacteur d'un volume compris entre 20 m³ environ et 100 m³ environ.

12. Procédé selon l'une des revendications 1 à 11, **caractérisé en ce que** les eaux usées sont tout d'abord amenées dans un bassin d'eaux usées puis progressivement au réacteur.

13. Procédé selon l'une des revendications 1 à 12, **caractérisé en ce que** l'eau séparée de la pâte fluide est amenée dans un bassin d'aération dans lequel l'eau est mélangée à de l'air.

14. Procédé selon la revendication 13, **caractérisé en ce que** l'on utilise dans le bassin d'aération un injecteur qui injecte dans le volume d'eau contenu dans le bassin d'aération au moins le même volume d'air, avantageusement au moins 3 à 5 fois le volume d'air, dans des conditions normales, l'air étant injecté avantageusement en 50 à 90 minutes.

15. Procédé selon l'une des revendications 1 à 14, **caractérisé en ce que** l'eau est amenée du réacteur, ou le cas échéant du bassin d'aération, à travers un clarificateur à tôles inclinées.

16. Procédé selon l'une des revendications 1 à 15, **caractérisé en ce que** l'eau est amenée du réacteur, ou le cas échéant du bassin d'aération ou du clarificateur à tôles inclinées, dans un réacteur de séparation, de l'huile ou des liquides à faible point d'ébullition étant séparés par coalescence dans le réacteur de séparation.

17. Procédé selon la revendication 16, **caractérisé en ce que** le réacteur de séparation comporte un dispositif de filtrage doté de corps de remplissage, les corps de remplissage étant avantageusement constitués d'anneaux Raschig.

18. Procédé selon la revendication 16 ou 17, **caractérisé en ce que** l'huile surnageant à la surface de l'eau est retirée dans le réacteur de séparation.
